# EUROPEAN PATENT APPLICATION

(11) **EP 3 439 369 A1**
(43) Date of publication of application: **06.02.2019**
(21) Application number: 17774985.0
(22) Date of filing: 27.03.2017
(51) Int. Cl.: H04W 48/16, H04W 48/10, H04W 56/00, H04W 72/04

(54) **USER TERMINAL, WIRELESS BASE STATION, AND WIRELESS COMMUNICATION METHOD**

(30) Priority: 28.03.2016 JP 2016063793
(71) Applicant: NTT DOCOMO, INC., Chiyoda-ku Tokyo 100-6150 (JP)
(72) Inventor: TAKEDA, Kazuaki, Tokyo 100-6150 (JP); SANO, Yousuke, Tokyo 100-6150 (JP); TAKEDA, Kazuki, Tokyo 100-6150 (JP); NAGATA, Satoshi, Tokyo 100-6150 (JP)
(74) Representative: Hoffmann Eitle
(86) International application number: PCT/JP2017/012475
(87) International publication number: WO 2017/170448

(57) **Abstract**

The present invention is designed to make it possible to acquire broadcast information in a suitable manner. According to one aspect of the present invention, a user terminal has a receiving section that receives a synchronization signal and a broadcast signal, and a control section that specifies a frequency hopping pattern that is applied to the broadcast signal based on the synchronization signal.

## Description

### Technical Field

The present invention relates to a user terminal, a radio base station and a radio communication method in a next-generation mobile communication system.

### Background Art

In the UMTS (Universal Mobile Telecommunications System) network, the specifications of long term evolution (LTE) have been drafted for the purpose of further increasing high speed data rates, providing lower latency and so on (see non-patent literature 1). Also, the specifications of LTE-A (also referred to as "LTE-advanced," "LTE Rel. 10," "LTE Rel. 11" or "LTE Rel. 12") have been drafted for further broadbandization and increased speed beyond LTE (also referred to as "LTE Rel. 8" or "LTE Rel. 9"), and successor systems of LTE (also referred to as, for example, "FRA (Future Radio Access)," "5G (5th generation mobile communication system)," "NR (New Radio)," "NX (New radio access)," "FX (Future generation radio access)," "LTE Rel. 13," "LTE Rel. 14," and/or later versions) are under study.

In LTE Rel. 10/11, carrier aggregation (CA) to integrate multiple component carriers (CC) is introduced in order to achieve broadbandization. Each CC is configured with the system bandwidth of LTE Rel. 8 as one unit. In addition, in CA, multiple CCs under the same radio base station (eNB: eNodeB) are configured in a user terminal (UE: User Equipment).

Meanwhile, in LTE Rel. 12, dual connectivity (DC), in which multiple cell groups (CGs) formed by different radio base stations are configured in a UE, is also introduced. Each cell group is comprised of at least one cell (CC). In DC, since multiple CCs of different radio base stations are integrated, DC is also referred to as "inter-eNB CA."

Also, in LTE Rel. 8 to 12, frequency division duplex (FDD), in which downlink (DL) transmission and uplink (UL) transmission are made in different frequency bands, and time division duplex (TDD), in which downlink transmission and uplink transmission are switched over time and made in the same frequency band, are introduced.

### Citation List

### Non-Patent Literature

Non-Patent Literature 1: 3GPP TS 36.300 "Evolved Universal Terrestrial Radio Access (E-UTRA) and Evolved Universal Terrestrial Radio Access Network (E-UTRAN); Overall Description; Stage 2"

### Summary of Invention

### Technical Problem

Future radio communication systems (for example, 5G) are expected to realize various radio communication services so as to fulfill mutually varying requirements (for example, ultra-high speed, large capacity, ultra-low latency, etc.).

For example, 5G is under research to provide radio communication services referred to as "eMBB (enhanced Mobile Broad Band)," "IoT (Internet of Things)," "MTC (Machine Type Communication)," "M2M (Machine To Machine)," "URLLC (Ultra Reliable and Low Latency Communications)," and so on. Note that, depending on the communicating device, M2M may be referred to as "D2D (Device To Device)," "V2V (Vehicular To Vehicular)," and/or the like. To fulfill the requirements for the above-mentioned various kinds of communication, studies are going on to design a new communication access scheme (new RAT (Radio Access Technology)).

Now, in existing LTE systems, a UE acquires broadcast information that includes the minimum information that is required when communicating in a carrier (for example, the downlink bandwidth), by receiving the broadcast channel (PBCH: Physical Broadcast Channel) in a predetermined radio resource.

However, in new RAT, a UE may support various bandwidths depending on services, and therefore there is a problem that broadcast information cannot be acquired properly from the existing PBCH.

The present invention has been made in view of the above, and it is therefore an object of the present invention to provide a user terminal, a radio base station and a radio communication method that make it possible to acquire broadcast information properly.

### Solution to Problem

According to one aspect of the present invention, a user terminal has a receiving section that receives a synchronization signal and a broadcast signal, and a control section that specifies a frequency hopping pattern that is applied to the broadcast signal based on the synchronization signal.

### Advantageous Effects of Invention

According to the present invention, broadcast information can be properly acquired.

### Brief Description of Drawings

FIGs. 1A to 1F are diagrams, each showing an example of the frequency band operation scenario used in 5G MTC;
FIG. 2 is a diagram to show an example of the connection mode of a UE that uses 5G RAT;
FIG. 3 is a diagram to show an example of the PBCH, to which frequency hopping is applied;
FIG. 4 is a diagram to show examples of patterns of broadcast channel-related information;
FIGs. 5A and 5B are diagrams to show examples of time resources in which synchronization signals are transmitted;
FIG. 6 is a diagram to show an example of a schematic structure of a radio communication system according to one embodiment of the present invention;
FIG. 7 is a diagram to show an example of an overall structure of a radio base station according to one embodiment of the present invention;
FIG. 8 is a diagram to show an example of a functional structure of a radio base station according to one embodiment of the present invention;
FIG. 9 is a diagram to show an example of an overall structure of a user terminal according to one embodiment of the present invention;
FIG. 10 is a diagram to show an example of a functional structure of a user terminal according to an embodiment of the present invention; and
FIG. 11 is a diagram to show an example hardware structure of a radio base station and a user terminal according to one embodiment of the present invention.

### Description of Embodiments

An access scheme that is used in existing LTE/LTE-A systems (which may be referred to as "LTE RAT") has been under study to provide its altered/enhanced versions (which may be referred to as "LTE-based RAT," "eLTE (enhanced LTE) RAT," and so on) as access schemes for use in new future communication systems (which may be referred to as "5G RAT," "new RAT," etc.).

5G RAT is expected to make a very wide range of frequencies (for example, 1 GHz to 100 GHz) target carrier frequencies, to be used in communication for a variety of uses (services), and to accommodate a large number of user terminals with different circuit structures/circuit sizes and software configurations. Therefore, there is a possibility that multiple designs (numerologies) with different symbol durations, subcarrier spacings, etc. are supported depending on the requirements for each purpose of use.

To be more specific, although new radio parameters are stipulated in 5G RAT, for example, a study is under way to use the communication parameters that define radio frames in LTE (for example, the subcarrier spacing, the bandwidth, the symbol duration, etc.) by multiplying these parameters by a constant (for example, by N, 1/N, etc.) based on LTE RAT numerologies. Here, a "numerology" refers to a set of communication parameters that characterize the design of signals in a given RAT, or the design of the RAT, and so on. Note that multiple numerologies may be defined and used in one RAT.

In addition, when a numerology differs between one RAT (carrier) and another RAT (carrier), this means, that, for example, at least one of following (1) to (6) differs between these RATs, but these are not limiting:
(1) the subcarrier spacing;
(2) the CP (Cyclic Prefix) duration;
(3) the symbol duration;
(4) the number of symbols per transmission time interval (TTI);
(5) the TTI duration; and
(6) the filtering process, windowing process, etc.

For example, assuming the requirements for eMBB services for high-speed communication, loT services to target an enormous number of low-performance terminals and URLLC services to seek high reliability, low latency and so on are provided, a number of numerologies for 5G RAT may be defined so that each numerology fulfills these requirements in a specific carrier frequency.

For eMBB, a numerology that can provide support for overhead reduction, high-order MIMO and so on is desirable, so as to achieve high spectral efficiency. For loT, it is desirable to use a numerology that takes into account the narrowing of bands, redundancy and so on, in order to ensure high power efficiency and wide coverage. For URLLC, a numerology to take into account the shortening of TTIs, quality improvement and so on is desirable in order to achieve high response performance. The modes of services that can be used in the present embodiment are not limited to these.

For loT services, research is on-going to simplify the hardware configurations of UEs by permitting lowering of processing capabilities. For example, assuming that a terminal is designed for MTC (also referred to as "eMTC (enhanced MTC)"), it is studied to reduce the peak rate, limit the transport block size (TBS), limit the resource blocks (also referred to as "RBs," "PRBs (Physical Resource Blocks)," etc.), limit the receiving RF (Radio Frequency), and so on, compared with existing user terminals (for example, LTE terminals of and before Rel. 12).

Also, communication services (also referred to as, for example, "NB-IoT (Narrow Band loT)") for terminals that are capable only of transmission and receipt in LTE communication in narrower bands than eMTC terminals are under study.

Unlike LTE terminals where the system bandwidth (for example, 20 MHz (100 RBs), one component carrier, etc.) is configured as the upper limit of bandwidth for use, the upper limit of band for use by eMTC terminals and NB-loT terminals is limited to a predetermined narrow band (NB). The NB may be six consecutive PRBs that do not overlap in the frequency domain. For example, the NB may be the same as the minimum system band (for example, 1.4 MHz and six PRBs) in existing LTE systems (Rel. 12 or earlier LTE systems), or may be a portion of this band (for example, 180 kHz and one PRB). For example, although research is in progress in eMTC to use six PRBs, or one PRB in NB-IoT, as a narrow bandwidth, this is by no means limiting.

The number of uplink narrow bands and the number of downlink narrow bands may be different. The number of uplink/downlink narrow bands can be the largest integer that is equal to or smaller than the value given by dividing the uplink/downlink transmission bandwidth configured in a given cell, by the narrow bandwidth.

Based on NB-loT and/or eMTC, 5G-loT is assumed to basically use a subcarrier spacing of 15 kHz. However, in 5G-loT, backward compatibility needs not be taken into account and the subcarrier spacing needs not be 15 kHz. Also, as with the guard band operation and the stand-alone operation in NB-IoT, it is not necessary to consider the limitations on existing signals (for example, the application of cyclic redundancy check (CRC), the control area, etc.).

For 5G-loT, the main topics of discussion include the following: (a) massive connectivity; (b) longer battery life; (c) expansion of coverage; (d) faster data rates than current loT; and (e) low cost.

Above (a) is the main goal of 5G itself, and research is on-going on transmission/receipt without control channels, uplink non-orthogonal multiple access (NOMA), contention-based random access, and so on. 5G-IoT to provide massive connectivity may be referred to as "mMTC (massive MTC)," "5G MTC," and the like.

Regarding above (b), methods for simplifying communication schemes, improving spectral efficiency and so on are under study. For (c), repetitious transmission/receipt (repetition) is under study. With regard to above (d), study is in progress to support a plurality of UE categories (such as NB-IoT, eMTC and so on) as necessary. For above (e), research is on-going to maintain compatibility with NB-loT to enable the same narrow band operation.

5G MTC is under study to communicate in low frequency bands so as to support wide coverage. This band may be an existing low frequency band used in LTE. The modes of operation that are discussed include, as in NB-IoT, the stand-alone operation (mode to use a band apart from an LTE carrier), the in-band operation (mode to use a band inside an existing (normal) LTE carrier), and the guard band operation (mode to use an occupied band inside an LTE carrier's guard band), and/or other modes.

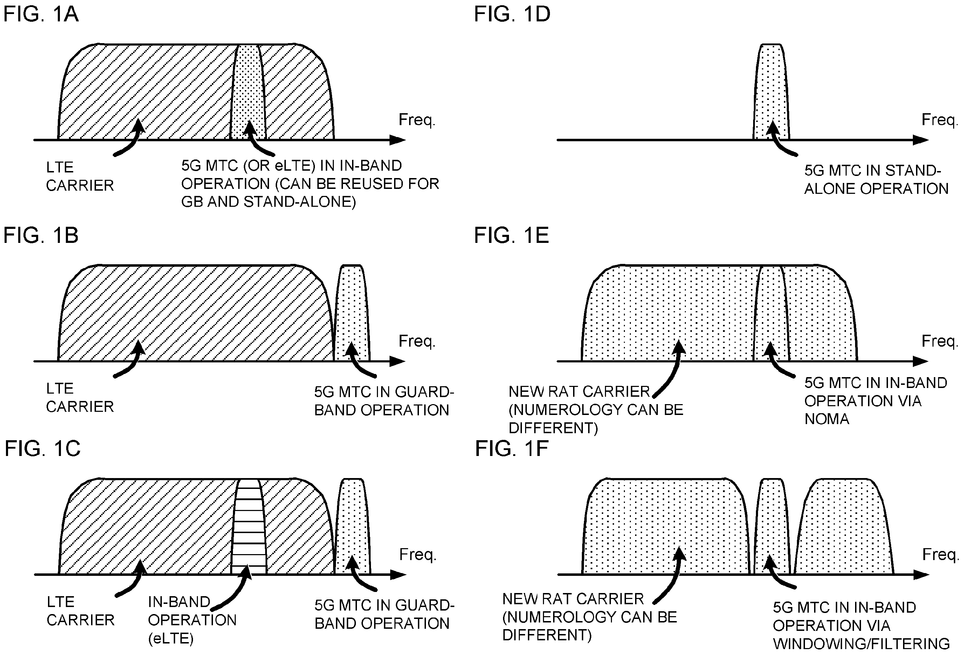

FIGs. 1 are diagrams to show examples of frequency band operation scenarios for use in 5G MTC. FIGs. 1A to 1C each show an example in which 5G MTC uses a carrier that overlaps or that is close to an existing LTE carrier. FIG. 1A shows the in-band operation of 5G MTC in an LTE carrier. Note that, in FIG. 1A, the carrier of 5G MTC may be used for eLTE, or may be re-used as a guard band for the LTE carrier. eLTE and/or 5G MTC may be used in the stand-alone operation.

In FIG. 1B, 5G MTC is operated in an LTE carrier's guard band. In this way, an existing guard band carrier can be used as an additional carrier in future radio communication schemes.

In FIG. 1C, 5G MTC is operated in an LTE carrier's guard band, and eLTE is used in the LTE carrier in the in-band operation. In this example, the UE can communicate, for example, by switching between the eLTE carrier and the 5G MTC carrier. Such switching may be performed based on commands transmitted from an eNB. By this means, it is possible to dynamically change and control the carrier, so as to prevent the deterioration of performance, based on changes in throughput, traffic volume, communication quality, and so on.

FIGs. 1D to 1F show examples in which 5G MTC uses a new RAT carrier. In FIG. 1D, 5G MTC is used in the stand-alone operation. Note that the new RAT carrier may use different numerologies than existing LTE carriers.

In FIG. 1E, 5G MTC is used in the in-band operation in a new RAT carrier. In this example, 5G MTC is multiplexed, by NOMA, in an area to overlap the new RAT carrier having a wider bandwidth (providing services such as, for example, eMBB, URLLC and so on). The method of using two new RAT carriers together is not limited to this. Note that a plurality of new RAT carriers may use different numerologies.

In FIG. 1F, 5G MTC is used in the in-band operation in a new RAT carrier. In this example, 5G MTC new RAT carriers are provided separately from other new RAT carriers by way of a windowing process and/or a filtering process. Note that different numerologies may be used among a plurality of new RAT carriers.

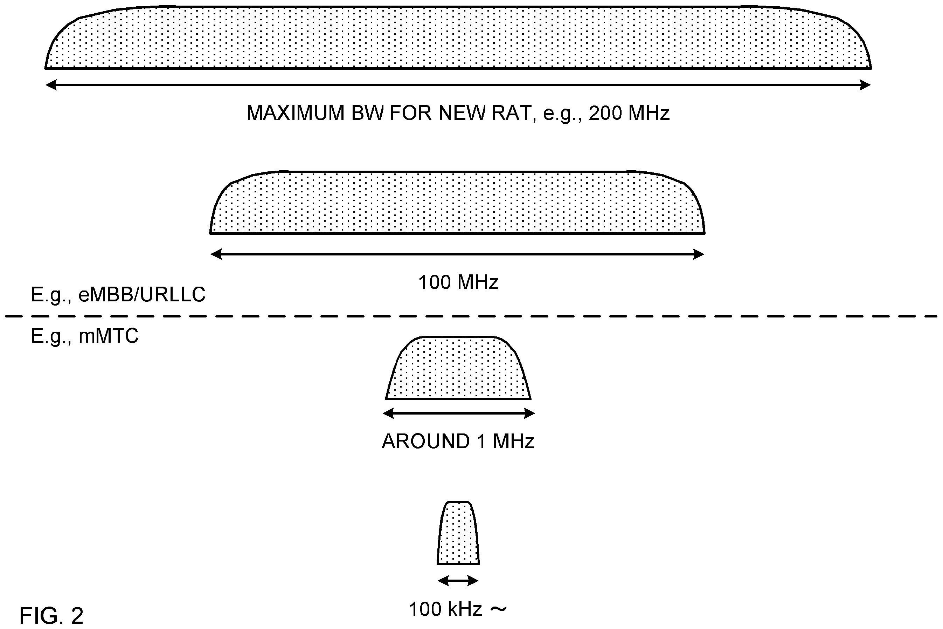

FIG. 2 is a diagram to show examples of bandwidths that may be used in 5G radio communication services. For example, in eMBB/URLLC, it is desirable if a bandwidth of 100 MHz or more (for example, the system band), having a range that is equal to or smaller than the maximum bandwidth for new RAT (for example, 200 MHz), can be used. In mMTC, it is desirable if a bandwidth of about 100 kHz or more (for example, the system band), having a range of about 1 MHz (for example, 1.4 MHz) or less, can be used.

The range of the bandwidth for each service is merely an example, and is not limited to the range of FIG. 2. For example, in mMTC, a bandwidth less than 100 kHz may be used. Also, different bandwidths may be used between the downlink and the uplink.

For each service, it is preferable to configure the bandwidth scalable. That is, even when a carrier is directed to the same service, it is preferable to apply configurations so that, considering the requirements, the environment and so on, the bandwidth to use is determined from a plurality of candidate bandwidths, the system bandwidth is changed dynamically and so on.

Now, in existing LTE systems, the minimum information that is necessary for communication in a certain carrier (for example, the downlink bandwidth, etc.) is reported in predetermined radio resources via a broadcast channel (PBCH: Physical Broadcast Channel). In eMTC, research on the use of the PBCH is in progress. On the other hand, in NB-IoT, a study is in progress to use a broadcast channel (also referred to as "NB-PBCH") that is different from that of existing LTE systems.

However, if a new broadcast channel is defined for use for every bandwidth that a UE supports (that is, for every bandwidth that may be used in radio communication services), in future radio communication systems where many radio communication services are likely to be provided, there will be different broadcast channels for every service, which leads to producing an overhead and lowering the spectral efficiency. Furthermore, when the existing PBCH, NB-PBCH and so on, which use only a predetermined frequency, are used in future radio communication systems, the allocation of resources may not be flexible, and there is a possibility that the quality of communication and the spectral efficiency will decrease.

So, the present inventors have worked on making the format of the broadcast channel scalable, and come up with the idea of allowing a UE to identify the format of the broadcast channel and receive the broadcast channel. To be more specific, the present inventors have come up with the idea of reporting the format of the broadcast channel (broadcast signal) to the UE explicitly/implicitly by using a synchronization channel (synchronization signal).

According to one aspect of the present invention, the degradation of spectral efficiency due to unnecessary transmission of the broadcast channel can be suppressed. In addition, since the UE can identify scalable broadcast channel formats, it is possible to shorten the latency before broadcast information is acquired.

Now, embodiments of the present invention will be described below in detail with reference to the accompanying drawings. Hereinafter, a broadcast channel that supports 100 kHz to about 1 MHz in common will be described as a broadcast channel (BCH) for MTC (mMTC) terminals, but application of the present invention is not limited to this. For example, the present invention can also be applied to a broadcast channel that supports in common a wide band to cover a plurality of radio communication services (mMTC, eMBB, URLLC, etc.).

Now, according to the following embodiment, a synchronization channel (synchronization signal) may be any signal for use in the synchronization process. For example, the existing primary synchronization signal (PSS) and secondary synchronization signals (SSSs) or discovery signals (DSs/DRSs (Discovery Reference Signals)) may be used as synchronization signals, signals that enhance/modify these synchronization signals (may be referred to as, for example, "enhanced PSS/eSSS" and so on), new signals that are different from these signals, and/or signals that combine at least part of these signals may be used as synchronization signals.

Here, the synchronization process includes at least one of frequency synchronization (for example, synchronization of the carrier frequency (center frequency)), time synchronization (for example, synchronization of subframe timing), cell search, identification of a cell/transmission point (for example, acquiring a physical cell ID (PCID: Physical Cell Identity)), RRM (Radio Resource Management) measurement, channel estimation (measurement) and so on.

Note that the UE may perform a part of the synchronization process (for example, frequency/time synchronization) using a predetermined synchronization signal (for example, the PSS) and perform other parts of the synchronization process using other synchronization signals (for example, SSSs). Once the synchronization process is complete, the UE can complete the cell search and establish communication with the discovered eNB.

In addition, the broadcast channel is the channel for transmitting broadcast signals, and this may be an existing broadcast channel (PBCH: Physical Broadcast Channel), a channel that is defined by enhancing/modifying the existing PBCH (which may be referred to as, for example, an "ePBCH (enhanced PBCH)," "mPBCH (massive PBCH)," and so on), a new channel apart from these, or a combination of these channels or part of these channels.

In the following embodiment, the PSS/SSS (at least one of the PSS and the SSS) will be exemplified as the synchronization signals, and the PBCH will be exemplified as the broadcast channel.

Furthermore, the broadcast signal (broadcast information) to be transmitted in the broadcast channel may be the master information block (MIB) or information that is defined by enhancing/modifying the MIB (may be referred to as, for example, "eMIB (enhanced MIB)"), new information apart from these, or a combination of the above information or part of the above information. For example, system information blocks (SIBs), or information that is defined by enhancing/modifying SIBs (may be referred to as, for example, "eSIBs (enhanced SIBs)"), may be transmitted using the broadcast channel.

### (Radio Communication Method)

### <Judging Format of Broadcast Channel>

In one embodiment of the present invention, a UE determines the format (for example, the radio resource, the numerology, etc.) of the broadcast channel (broadcast signal) based on the synchronization channel (synchronization signal). The UE receives broadcast information via the broadcast channel.

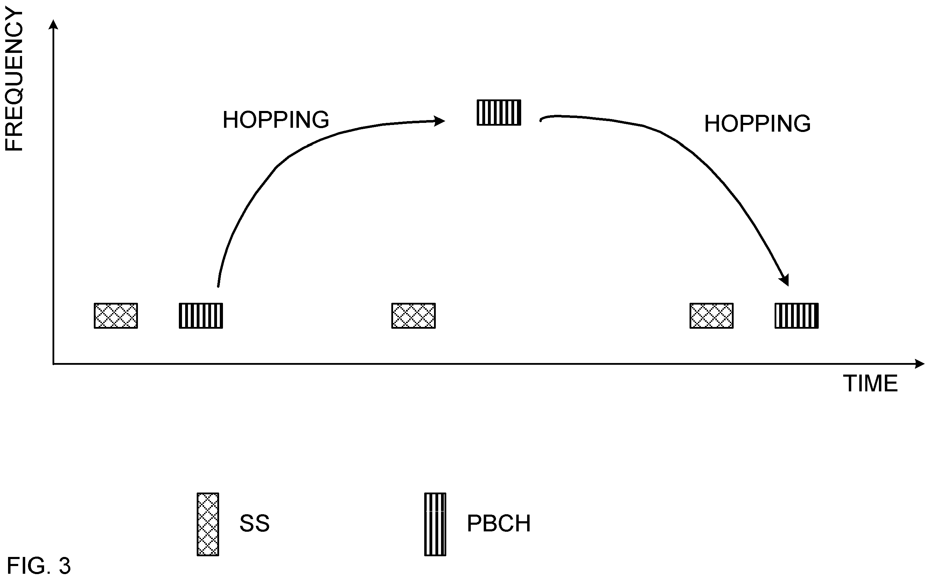

Frequency hopping can be applied to the PBCH according to the present embodiment, unlike the existing PBCH. FIG. 3 is a diagram to show an example of a PBCH to which frequency hopping is applied. Referring to FIG. 3, the synchronization signal (SS) is transmitted periodically in the same frequency band. Meanwhile, the PBCH is not only transmitted in the same frequency band as that of the SS like the existing PBCH, but also hops on to a frequency band apart from the SS and transmitted there. Note that the hopping pattern (frequency hopping pattern) shown in FIG. 3 is merely an example, and is not limiting.

The hopping pattern of the PBCH may be determined in advance (for example in the specification). Information about the hopping pattern of the PBCH (for example, the frequency resources, the time resources, the number of hops, the amount of frequency shift, the amount of time shift, etc.) may be reported via the synchronization signal.

Furthermore, information as to whether frequency hopping applies to the PBCH may be also reported via the synchronization signal. The UE can determine (specify) whether or not frequency hopping applies to the PBCH, based on this information. If the UE determines that frequency hopping does not apply to the PBCH, the UE may attempt to receive the PBCH assuming that the PBCH is transmitted in a predetermined (fixed) frequency band.

Also, at least one of information about the frequency resource of the PBCH (for example, information for specifying at least one of the bandwidth (the number of PRBs), the center frequency, the subcarrier spacing, etc.), information about the time resource of the PBCH (for example, information for specifying at least one of the number of repetitions, the cycle, the subframe position, the symbol position, the offset, etc.), information about the modulation and coding scheme for the PBCH (MCS: Modulation and Coding Scheme), and information about the TBS of the PBCH, may be reported (acquire) via the synchronization signal.

The above-noted various pieces of information, including information about the hopping pattern of the PBCH, information about the frequency resource of the PBCH and so on, may be referred to as "information related to the PBCH (broadcast channel)," "information related to the broadcast signal," and so on.

The information related to the broadcast channel may be reported in an explicit manner by using one, two or more synchronization signals, out of one or more synchronization signals provided (for example, the PSS, SSSs, and/or the like), or may be reported (judged) in an implicit manner based on the transmission patterns (represented by, for example, at least one of the positions of transmission subframes, cycles, radio resources, offsets and/or others) of one, two or more synchronization signals among the synchronization signals that are provided, synchronization signal sequences (for example, scrambling sequences), other synchronization signal-related parameters (information) or combinations of these.

For example, the UE may identify the broadcast channel-related information based on the gap (such as the minimum number of subframes) between the PSS and the SSS received. Also, when the UE recognizes candidate radio resources (multiplexing positions) where a synchronization signal (the PSS and/or the SSS) is transmitted, the UE may blind-decode the synchronization signal in the candidate radio resource, and identify the broadcast channel-related information based on the location of the radio resource where the decoding was successfully done.

The UE may also use another piece of information (for example, cell ID (Identity)) that can be acquired from the synchronization signal to identify the broadcast channel-related information. For example, the UE may determine the PBCH hopping pattern based on the cell ID. The UE may receive the broadcast channel based on the above broadcast channel-related information (information necessary for receiving the broadcast channel) that was reported or identified.

Patterns of broadcast channel-related information (pairings of one or more pieces of information) may be associated with a predetermined index (which may be a number, an indication and so on). In this case, this index may be included in synchronization signals and reported.

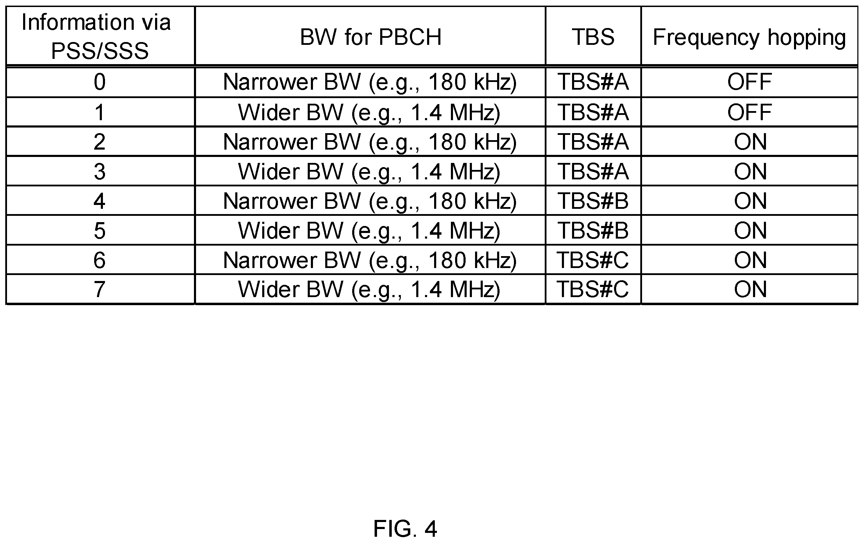

FIG. 4 is a diagram to show examples of patterns of broadcast channel-related information. In this example, the index that is reported via the PSS and/or the SSS ("Information via PSS/SSS") is associated with pieces of information that relate to the PBCH bandwidth, the TBS, and whether or not frequency hopping applies. Note that the pairings of broadcast channel-related information that are associated with the index are not limited to these examples, and any of the above-described information or pairings of information may be used.

In FIG. 4, two PBCH bandwidths -- namely, a narrower bandwidth (for example, 180 kHz) and a wider bandwidth (for example, 1.4 MHz) -- are defined, but these are not limiting, and three or more bandwidths may be associated with the index.

As for the TBS of the PBCH, three TBSs #A to #C are defined, but these are not limiting. Note that the UE may know in advance the bandwidth, the specific value of the TBS, the hopping pattern and so on. Also, if hopping is enabled ("ON"), the UE may identify the hopping pattern based on other pieces of broadcast channel-related information (the bandwidth, the TBS, the carrier frequency, etc.).

Also, the associations between the index and the broadcast channel-related information may be defined in advance, or reported via physical layer signaling (for example, DCI (Downlink Control Information)), higher layer signaling (for example, RRC (Radio Resource Control) signaling, broadcast information, etc.), other signals, or combinations of these. This report may be sent via a carrier (for example, an existing LTE carrier) apart from the carrier where the PBCH is transmitted, or may be sent in the same carrier (may be reported, for example, after RRC connection is established once). As described above, the patterns shown in FIG. 4 may be configured so that the associations can be changed.

Note that the pattern of broadcast channel-related information may be configured to be associated with the transmission pattern of one or more synchronization signals, the synchronization signal sequence, other synchronization signal-related parameters, other pieces of information that can be acquired from the synchronization signals, or combinations of these, in place of or in addition to an index.

If the UE has terminal capability information (UE capability) that relates to multiple bandwidths where the UE is capable of transmission and/or receipt, the UE may attempt to receive the broadcast channel, on a blind basis, based on the assumption that the broadcast channel is transmitted using these multiple bandwidths. Also, the UE may specify the bandwidth where the broadcast channel is transmitted based on the synchronization signal transmitted from the eNB.

Also, if the UE is judged capable of receipt in a relatively narrow bandwidth (for example, 180 kHz) and a relatively wide bandwidth (for example, 1.4 MHz), the eNB may decide to transmit the broadcast channel in the relatively wide bandwidth, and report information about the relatively wide bandwidth to the UE by using synchronization signals. By this means, it is possible to avoid transmitting the broadcast channel in the relatively narrow bandwidth, so that the decrease of spectral efficiency can be reduced. The UE may perform the receiving process assuming that the broadcast channel is transmitted in the relatively wide bandwidth between the relatively narrow bandwidth and the relatively wide bandwidth where the UE is capable of receipt.

On the other hand, if the UE is judged capable of receipt in the relatively narrow bandwidth, the eNB may decide transmitting the broadcast channel in the relatively narrow bandwidth, and report information about the relatively narrow bandwidth to the UE by using synchronization signals. By this means, when, for example, the eNB receives capability information from a plurality of UEs, the eNB can transmit the broadcast channel such that the multiple UEs, having different communication capabilities, can all receive the broadcast channel, and, consequently, it is possible to reduce the delay caused by the receipt of the broadcast channel. The UE may perform the receiving process assuming that the broadcast channel is transmitted in the relatively narrow bandwidth between the relatively narrow bandwidth and the relatively wide bandwidth where the UE is capable of receipt.

Note that the resources where synchronization signals are allocated, the numerology used to transmit synchronization signals, the format of synchronization signals (for example, the sequence, the allocation pattern (comb) of sequences, etc.) and so on may be stipulated in advance in the specification, and recognized accordingly by the UE, or may be blind-detected by the UE.

According to the above-described embodiment, the UE can acquire information related to the broadcast channel based on synchronization signals, so that it is possible to prevent the time it takes to acquire broadcast information from increasing.

### <Format of Synchronization Signal>

An example of the format of the synchronization channel (synchronization signal) used in the present embodiment will be described. The broadcast channel-related information described above may be reported using synchronization signals of the format that will be described below, but synchronization signals of different formats may be used as well.

It is preferable that the synchronization channel supports the same bandwidth as the bandwidth (in the above example, 100 kHz to about 1 MHz) which the broadcast channel supports, in common. The UE performs the synchronization processes using one or more synchronization signals.

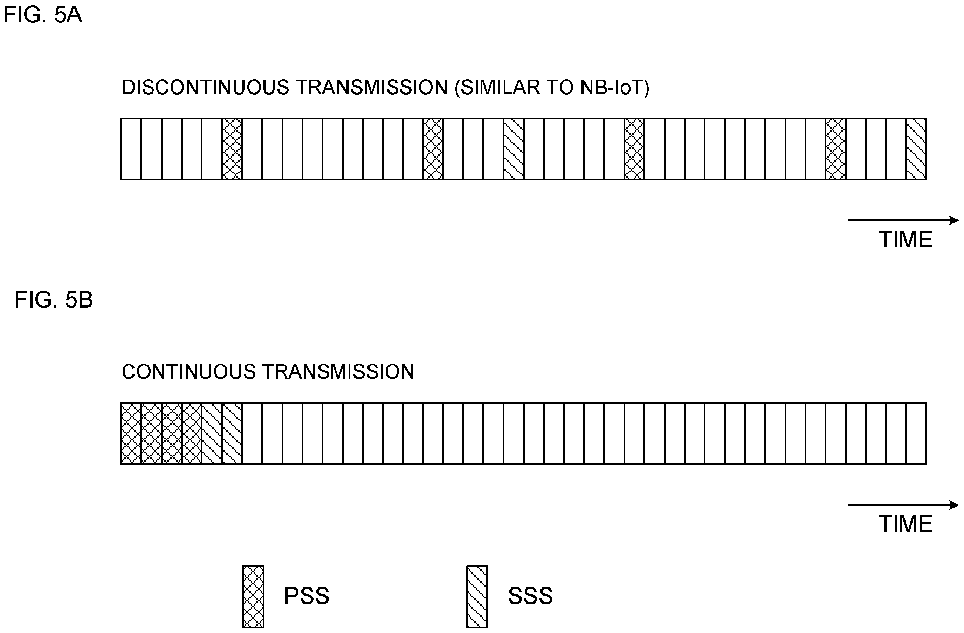

FIGs. 5 provide diagrams to show examples of time resources where synchronization signals are transmitted. FIG. 5A shows a case where synchronization signals are transmitted discontinuously (as in the case of NB-IoT), and FIG. 5B shows a case where synchronization signals are transmitted continuously. In FIGs. 5, each square represents a subframe, but this is not limiting, and each square may represent another time unit such as a symbol.

Each synchronization signal is preferably transmitted periodically. As shown in FIG. 5A, a plurality of synchronization signals may be transmitted in different cycles. Furthermore, as shown in FIG. 5B, by transmitting synchronization signals in a row (burst transmission) in each cycle, it is possible to increase the time to turn off the communication functions of the UE/eNB, so that the power consumption can be reduced. Note that the configurations shown in FIGs. 5A and 5B may be used in combination. For example, the UE may receive a synchronization signal that is transmitted discontinuously and a synchronization signal that is transmitted continuously, separately, and perform the synchronization process.

Note that frequency hopping may be applied to synchronization signals. In this case, the hopping pattern may be determined in advance (for example, in the specification) or information related to the hopping pattern may be reported via another carrier. The UE may blind-decode candidate resources where synchronization signals may be allocated, and detect the synchronization signals.

### (Alternative Example)

Also, the above radio communication method is not limited to 5G RAT, and may be applied to other RATs such as LTE RAT. Also, the radio communication method described above may be applied to both the PCell (Primary Cell) and SCells (Secondary Cells), or may be applied to only one of these cells. For example, the radio communication method described above may be applied only to licensed bands (or carriers where listening is not configured), or the above-described radio communication method may be used only in unlicensed bands (or carriers where listening is not configured).

The above-described radio communication method is not limited to the stand-alone configuration of 5G RAT, and can also be used when access to LTE-RAT is possible. For example, the UE may specify the hopping pattern and allocation resources for the PBCH in the first RAT (for example, 5G RAT) based on synchronization signals transmitted in a second RAT (for example, LTE RAT).

Furthermore, when a plurality of broadcast signals (broadcast channels) are configured (or defined), the above radio communication method can be used to specify information related to each broadcast channel. For example, the UE may identify the information related to the first broadcast channel based on the first synchronization signal, and identify information related to a second broadcast channel based on a second synchronization signal. Different hopping patterns may be applied to these broadcast channels, or frequency hopping may be applied to only one of them.

### (Radio Communication System)

Now, the structure of a radio communication system according to one embodiment of the present invention will be described below. In this radio communication system, the radio communication method according to one and/or a combination of the above-described embodiments of the present invention is employed.

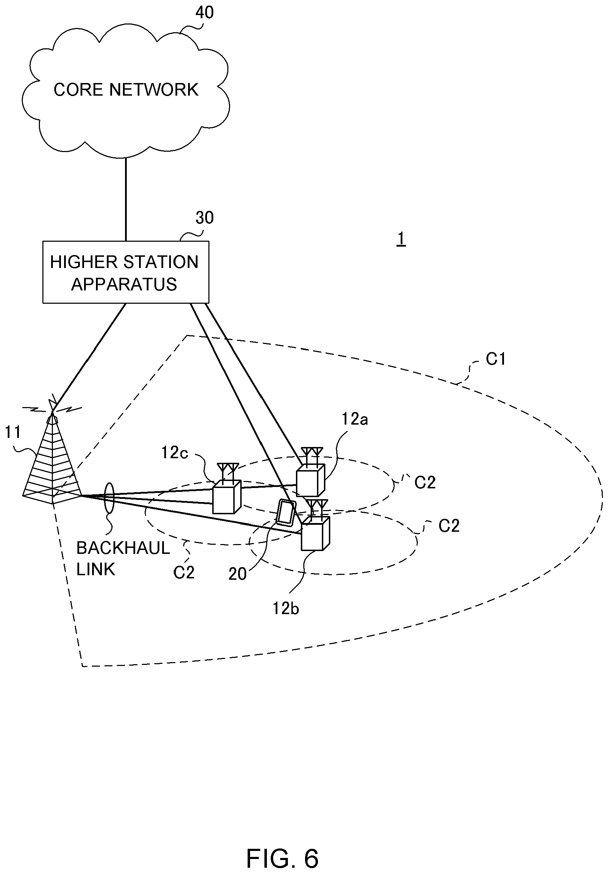

FIG. 6 is a diagram to show an example of a schematic structure of a radio communication system according to an embodiment of the present invention. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit.

Note that the radio communication system 1 is may be referred to as "LTE (Long Term Evolution)," "LTE-A (LTE-Advanced)," "LTE-B (LTE-Beyond)," "SUPER 3 G," "IMT-Advanced," "4G (4th generation mobile communication system)," "5G (5th generation mobile communication system)," "FRA (Future Radio Access)," "new RAT (Radio Access Technology)" and so on, or may be seen as a system to implement these.

The radio communication system 1 shown in FIG. 6 includes a radio base station 11 that forms a macro cell C1 of a relatively wide coverage, and radio base stations 12 (12a to 12c) that form small cells C2, which are placed within the macro cell C1 and which are narrower than the macro cell C1. Also, user terminals 20 are placed in the macro cell C1 and in each small cell C2.

The user terminals 20 can connect with both the radio base station 11 and the radio base stations 12. The user terminals 20 may use the macro cell C1 and the small cells C2 at the same time by means of CA or DC. Furthermore, the user terminals 20 may apply CA or DC using a plurality of cells (CCs) (for example, five or fewer CCs or six or more CCs).

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier (for example, a 5G RAT carrier) of a relatively high frequency band (for example, 3.5 GHz, 5 GHz and so on) and a wide bandwidth may be used, or the same carrier as that used in the radio base station 11 may be used. Note that the structure of the frequency band for use in each radio base station is by no means limited to these.

A structure may be employed here in which wire connection (for example, means in compliance with the CPRI (Common Public Radio Interface) such as optical fiber, the X2 interface and so on) or wireless connection is established between the radio base station 11 and the radio base station 12 (or between two radio base stations 12).

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. Also, the radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals or stationary communication terminals.

In the radio communication system 1, as radio access schemes, orthogonal frequency division multiple access (OFDMA) is applied to the downlink, and single-carrier frequency division multiple access (SC-FDMA) is applied to the uplink. OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are by no means limited to the combination of these.

In the radio communication system 1, a downlink shared channel (PDSCH: Physical Downlink Shared CHannel), which is used by each user terminal 20 on a shared basis, a broadcast channel (PBCH: Physical Broadcast CHannel), downlink L1/L2 control channels and so on are used as downlink channels. User data, higher layer control information and SIBs (System Information Blocks) are communicated in the PDSCH. Also, the MIB (Master Information Block) is communicated in the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI), including PDSCH and PUSCH scheduling information, is communicated by the PDCCH. The number of OFDM symbols to use for the PDCCH is communicated by the PCFICH. Delivery acknowledgment information (also referred to as, for example, "retransmission control information," "HARQ-ACKs," "ACK/NACKs," etc.) of HARQ (Hybrid Automatic Repeat reQuest) in response to the PUSCH is transmitted by the PHICH. The EPDCCH is frequency-division-multiplexed with the PDSCH (downlink shared data channel) and used to communicate DCI and so on, like the PDCCH.

In the radio communication system 1, an uplink shared channel (PUSCH: Physical Uplink Shared CHannel), which is used by each user terminal 20 on a shared basis, an uplink control channel (PUCCH: Physical Uplink Control CHannel), a random access channel (PRACH: Physical Random Access CHannel) and so on are used as uplink channels. User data and higher layer control information are communicated by the PUSCH. Furthermore, uplink control information (UCI) to include at least one of downlink radio quality information (CQI: Channel Quality Indicator), delivery acknowledgment information and so on is communicated through the PUCCH. By means of the PRACH, random access preambles for establishing connections with cells are communicated.

In the radio communication systems 1, cell-specific reference signal (CRSs), channel state information reference signal (CSI-RSs), demodulation reference signal (DMRSs), positioning reference signal (PRSs) and so on are communicated as downlink reference signals. Also, in the radio communication system 1, measurement reference signals (SRSs: Sounding Reference Signals), demodulation reference signals (DMRSs) and so on are communicated as uplink reference signals. Note that the DMRS may be referred to as a "user terminal-specific reference signal (UE-specific Reference Signal)." Also, the reference signals to be communicated are by no means limited to these.

### <Radio Base Station>

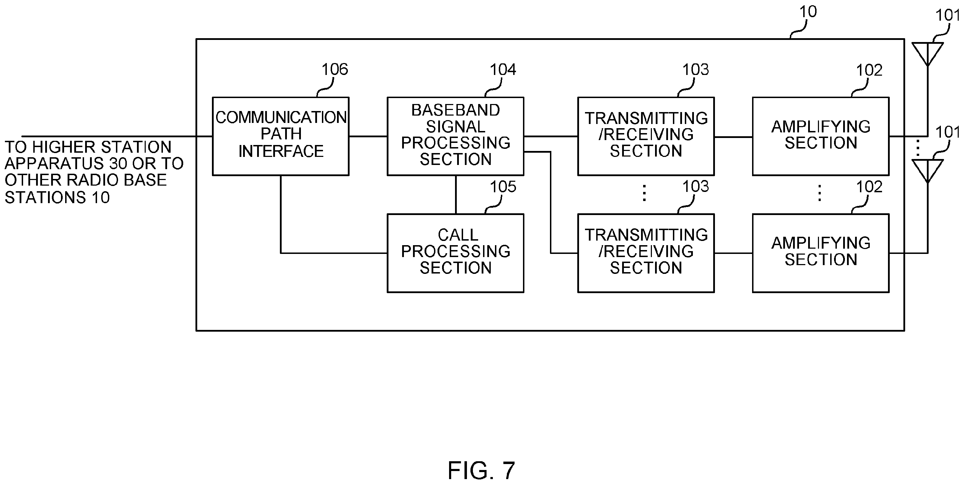

FIG. 7 is a diagram to show an example of an overall structure of a radio base station according to one embodiment of the present invention. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to the transmitting/receiving sections 103.

Baseband signals that are precoded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted by transmitters/receivers, transmitting/receiving circuits or transmitting/receiving apparatus that can be described based on general understanding of the technical field to which the present invention pertains. Note that a transmitting/receiving section 103 may be structured as a transmitting/receiving section in one entity, or may be constituted by a transmitting section and a receiving section. The transmitting/receiving sections 103 transmit, for example, the synchronization signals or the broadcast signal to the user terminal 20.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (such as setting up and releasing communication channels), manages the state of the radio base stations 10 and manages the radio resources.

The communication path interface section 106 transmits and receives signals to and from the higher station apparatus 30 via a predetermined interface. Also, the communication path interface 106 may transmit and receive signals (backhaul signaling) with other radio base stations 10 via an inter-base station interface (which is, for example, optical fiber that is in compliance with the CPRI (Common Public Radio Interface), the X2 interface, etc.).

Note that the transmitting/receiving sections 103 transmit synchronization signals and broadcast signals to the user terminal 20. Here, at least one of the synchronization signals may include information related to the broadcast signal (broadcast channel). Also, the transmitting/receiving sections 103 may receive, from the user terminal 20, a signal including terminal capability information related to the bandwidth where the user terminal 20 is capable of transmission and/or receipt.

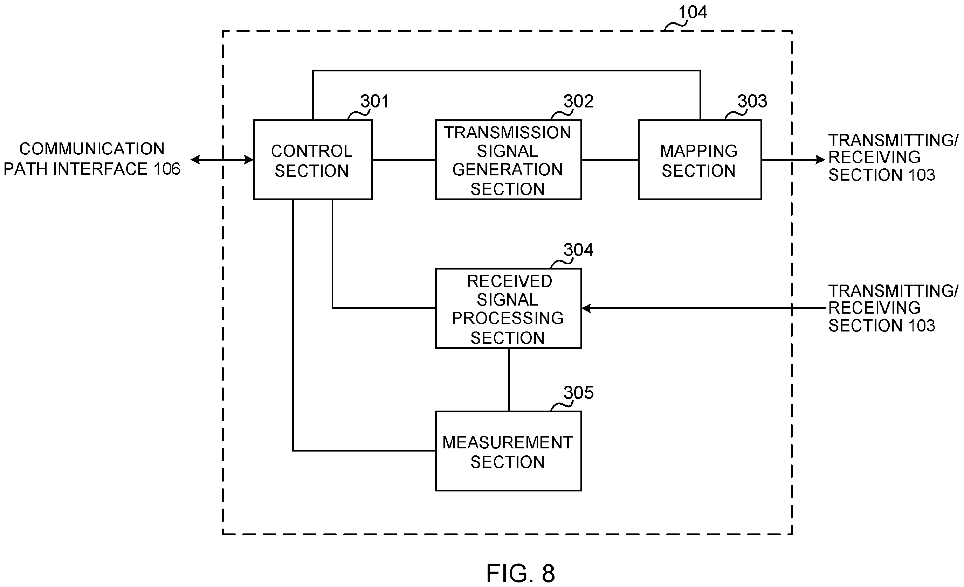

FIG. 8 is a diagram to show an example of functional structure of a radio base station according to one embodiment of the present invention. Note that, although FIG. 8 primarily shows functional blocks that pertain to characteristic parts of the present embodiment, the radio base station 10 has other functional blocks that are necessary for radio communication as well.

The baseband signal processing section 104 has a control section (scheduler) 301, a transmission signal generation section 302, a mapping section 303, a received signal processing section 304 and a measurement section 305. Note that these configurations have only to be included in the radio base station 10, and some or all of these configurations may not be included in the baseband signal processing section 104.

The control section (scheduler) 301 controls the whole of the radio base station 10. The control section 301 can be constituted by a controller, a control circuit or control apparatus that can be described based on general understanding of the technical field to which the present invention pertains.

The control section 301, for example, controls the generation of signals in the transmission signal generation section 302, the allocation of signals by the mapping section 303, and so on. Furthermore, the control section 301 controls the signal receiving processes in the received signal processing section 304, the measurements of signals in the measurement section 305, and so on.

The control section 301 controls the scheduling (for example, resource allocation) of downlink data signals that are transmitted in the PDSCH and downlink control signals that are communicated in the PDCCH and/or the EPDCCH. Also, the control section 301 controls the scheduling of downlink reference signals such as synchronization signals (the PSS (Primary Synchronization Signal) and the SSS (Secondary Synchronization Signal)), the CRS, the CSI-RS, the DM-RS and so on.

In addition, the control section 301 controls the scheduling of uplink data signals that are transmitted in the PUSCH, uplink control signals that are transmitted in the PUCCH and/or the PUSCH (for example, delivery acknowledgment information), random access preambles that are transmitted in the PRACH, uplink reference signals, and so on.

To be more specific, the control section 301 controls the user terminal 20 to communicate by using predetermined radio access schemes (for example, LTE RAT, 5G RAT and so on). The control section 301 controls (specifies), for example, the numerologies that apply to predetermined signals.

The control section 301 exerts control so that broadcast information is transmitted via a predetermined broadcast channel.

The control section 301 exerts controls so that synchronization signals that are transmitted from the transmission sections 103 are generated in association with information related to the broadcast channel and used in the user terminal 20 to specify at least one piece of broadcast signal (broadcast channel)-related information.

Here, when a synchronization signal is generated in association with information related to a broadcast channel, this might mean that the synchronization signal is generated to include this information explicitly or the information is transmitted with the synchronization signal, or mean that the synchronization signal's transmission pattern, the sequence and other parameters related to the synchronization signal and so on are determined from the information, based on predetermined associations, and the synchronization signal is generated accordingly.

For example, the control section 301 may exert control so that synchronization signals are generated in association with frequency hopping patterns that apply to broadcast signals. Furthermore, the control section 301 may exert control so that at least one of the transmission pattern of one or more synchronization signals, the sequence or other pieces of synchronization signal-related information and/or the like is generated in association with the frequency hopping patterns.

The control section 301 may exert control so that synchronization signals are generated in association with whether or not frequency hopping is applied to a predetermined broadcast signal.

Furthermore, the control section 301 may exert control so that synchronization signals are generated in association with at least one of the frequency resource, the time resource, the MCS, and the TBS that is used to transmit a predetermined broadcast signal.

When terminal capability (UE capability) information that relates to a bandwidth where the user terminal 20 is capable of transmission and/or receipt arrives from the transmitting/receiving sections 103, the control section 301 can take control of the broadcast channel for transmitting broadcast information taking the capability information into account.

The transmission signal generation section 302 generates downlink signals (downlink control signals, downlink data signals, downlink reference signals and so on) based on commands from the control section 301, and outputs these signals to the mapping section 303. The transmission signal generation section 302 can be constituted by a signal generator, a signal generating circuit or signal generating apparatus that can be described based on general understanding of the technical field to which the present invention pertains.

For example, the transmission signal generation section 302 generates DL assignments, which report downlink signal allocation information, and UL grants, which report uplink signal allocation information, based on commands from the control section 301. Also, the downlink data signals are subjected to the coding process, the modulation process and so on, by using coding rates and modulation schemes that are determined based on, for example, channel state information (CSI) from each user terminal 20.

The mapping section 303 maps the downlink signals generated in the transmission signal generation section 302 to predetermined radio resources based on commands from the control section 301, and outputs these to the transmitting/receiving sections 103. The mapping section 303 can be constituted by a mapper, a mapping circuit or mapping apparatus that can be described based on general understanding of the technical field to which the present invention pertains.

The received signal processing section 304 performs receiving processes (for example, demapping, demodulation, decoding and so on) of received signals that are input from the transmitting/receiving sections 103. Here, the received signals include, for example, uplink signals transmitted from the user terminals 20 (uplink control signals, uplink data signals, uplink reference signals, etc.). For the received signal processing section 304, a signal processor, a signal processing circuit or signal processing apparatus that can be described based on general understanding of the technical field to which the present invention pertains can be used.

The received signal processing section 304 outputs the decoded information acquired through the receiving processes to the control section 301. For example, when a PUCCH to contain an HARQ-ACK is received, the received signal processing section 304 outputs this HARQ-ACK to the control section 301. Also, the received signal processing section 304 outputs the received signals, the signals after the receiving processes and so on, to the measurement section 305.

The measurement section 305 conducts measurements with respect to the received signals. The measurement section 305 can be constituted by a measurer, a measurement circuit or measurement apparatus that can be described based on general understanding of the technical field to which the present invention pertains.

The measurement section 305 may measure, for example, the received power (for example, RSRP (Reference Signal Received Power)), the received signal strength (for example, RSSI (Received Signal Strength Indicator)), the received quality (for example, RSRQ (Reference Signal Received Quality)), the channel state, and so on, of the received signal. The measurement results may be output to the control section 301.

### (User Terminal)

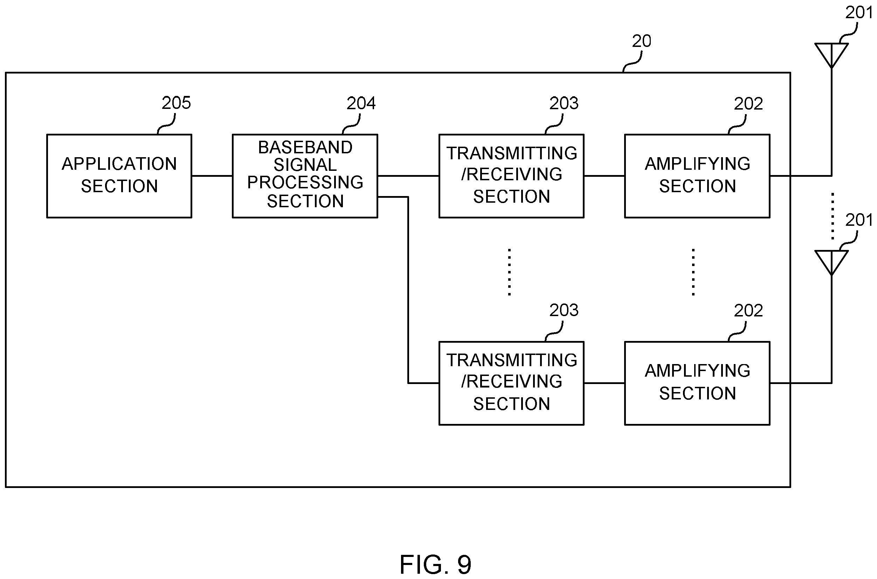

FIG. 9 is a diagram to show an example of an overall structure of a user terminal according to one embodiment of the present invention. A user terminal 20 has a plurality of transmitting/receiving antennas 201, amplifying sections 202, transmitting/receiving sections 203, a baseband signal processing section 204 and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving sections 203 receive the downlink signals (for example, the synchronization signals or the broadcast signal) amplified in the amplifying sections 202. The received signals are subjected to frequency conversion and converted into the baseband signal in the transmitting/receiving sections 203, and output to the baseband signal processing section 204. A transmitting/receiving section 203 can be constituted by a transmitters/receiver, a transmitting/receiving circuit or transmitting/receiving apparatus that can be described based on general understanding of the technical field to which the present invention pertains. Note that a transmitting/receiving section 203 may be structured as a transmitting/receiving section in one entity, or may be constituted by a transmitting section and a receiving section.

In the baseband signal processing section 204, the baseband signal that is input is subjected to an FFT process, error correction decoding, a retransmission control receiving process, and so on. Downlink user data is forwarded to the application section 205. The application section 205 performs processes related to higher layers above the physical layer and the MAC layer, and so on. Furthermore, in the downlink data, broadcast information is also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203. Baseband signals that are output from the baseband signal processing section 204 are converted into a radio frequency band in the transmitting/receiving sections 203 and transmitted. The radio frequency signals that are subjected to frequency conversion in the transmitting/receiving sections 203 are amplified in the amplifying sections 202, and transmitted from the transmitting/receiving antennas 201.

Note that the transmitting/receiving sections 203 receive synchronization signals and broadcast signals from the radio base station 10. Here, at least one of the synchronization signals may include information related to broadcast signals (broadcast channel). Also, the transmitting/receiving sections 203 may transmit, to the radio base station 10, a signal that includes terminal capability information related to the bandwidth where the user terminal 20 is capable of transmission and/or receipt.

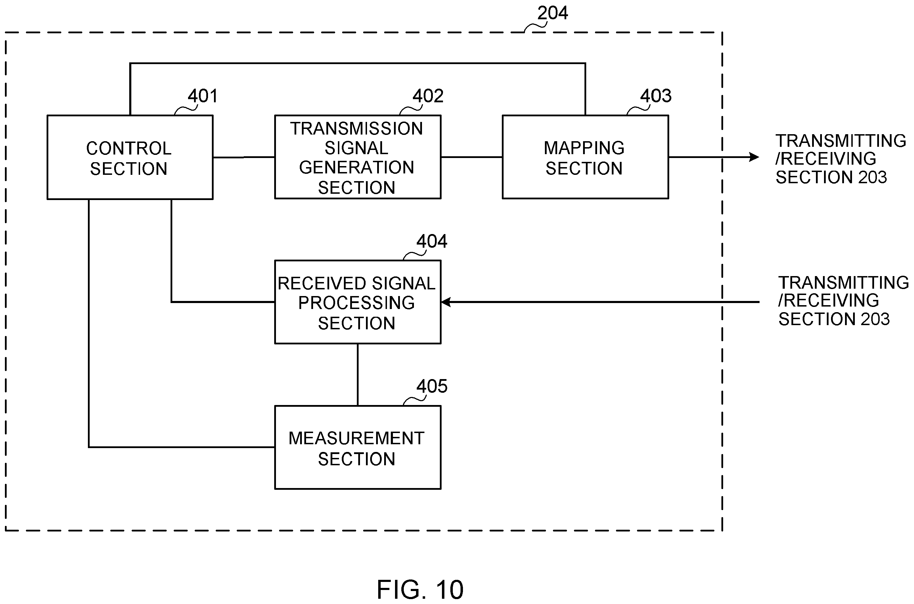

FIG. 10 is a diagram to show an example of a functional structure of a user terminal according to one embodiment of the present invention. Note that, although FIG. 10 primarily shows functional blocks that pertain to characteristic parts of the present embodiment, the user terminal 20 has other functional blocks that are necessary for radio communication as well.

The baseband signal processing section 204 provided in the user terminal 20 has a control section 401, a transmission signal generation section 402, a mapping section 403, a received signal processing section 404 and a measurement section 405. Note that these configurations may be included in the user terminal 20, and some or all of the configurations need not be included in the baseband signal processing section 204.

The control section 401 controls the whole of the user terminal 20. For the control section 401, a controller, a control circuit or control apparatus that can be described based on general understanding of the technical field to which the present invention pertains can be used.

The control section 401, for example, controls the generation of signals in the transmission signal generation section 402, the allocation of signals by the mapping section 403, and so on. Furthermore, the control section 401 controls the signal receiving processes in the received signal processing section 404, the measurements of signals in the measurement section 405, and so on.

The control section 401 acquires the downlink control signals (signals transmitted in the PDCCH/EPDCCH) and downlink data signals (signals transmitted in the PDSCH) transmitted from the radio base station 10, via the received signal processing section 404. The control section 401 controls the generation of uplink control signals (for example, delivery acknowledgement information and so on) and/or uplink data signals based on the results of deciding whether or not retransmission control is necessary for the downlink control signals and/or downlink data signals, and so on.

To be more specific, the control section 401 controls the user terminal 20 to communicate by using a predetermined radio access scheme (for example, LTE RAT, 5G RAT, and so on). The control section 401 may specify numerologies applied to a predetermined signal and control receipt of the predetermined signal according to the numerology.

The control section 401 may identify the frequency hopping pattern that is applied to at least one broadcast signal, based on the synchronization signals received in the transmitting/receiving sections 203. For example, the control section 401 may specify this frequency hopping pattern based on information (information related to the broadcast channel) reported (transmitted) in a predetermined synchronization signal. Furthermore, the control section 401 may specify the frequency hopping pattern based on at least one of the transmission pattern of one or more synchronization signals, the sequence or other pieces of synchronization signal-related information and/or the like.

The control section 401 may judge whether or not frequency hopping is applied to a predetermined broadcast signal based on a synchronization signal received in the transmitting/receiving section 203.

Also, based on a synchronization signal received at the transmitting/receiving section 203, the control section 401 may determine at least one of the frequency resource, the time resource, the MCS and the TBS that is used to transmit a predetermined broadcast signal.

The control section 401 can perform control so that a signal that includes terminal capability information related to the bandwidth where the user terminal 20 is capable of transmission and/or receipt is transmitted. In addition, when information about a plurality of bandwidths is transmitted as terminal capability information, the control section 401 may control the transmitting/receiving section 203 and the received signal processing section 404 to perform the receiving process based on the assumption that the broadcast channel is transmitted in at least one of the plurality of bandwidths.

Also, the control section 401 may control the received signal processing section 404 to blind-decode the synchronization signals and/or the broadcast signals. For example, the control section 401 may control the received signal processing section 404 to blind-decode a broadcast signal that is transmitted in a bandwidth of the minimum allocation unit in a predetermined communication standard, and a broadcast signal that is transmitted in a bandwidth wider than this frequency bandwidth.

The transmission signal generation section 402 generates uplink signals (uplink control signals, uplink data signals, uplink reference signals, etc.) based on commands from the control section 401, and outputs these signals to the mapping section 403. The transmission signal generation section 402 can be constituted by a signal generator, a signal generating circuit or signal generating apparatus that can be described based on general understanding of the technical field to which the present invention pertains.

For example, the transmission signal generation section 402 generates uplink control signals related to delivery acknowledgement information, channel state information (CSI) and so on, based on commands from the control section 401. Also, the transmission signal generation section 402 generates uplink data signals based on commands from the control section 401. For example, when a UL grant is included in a downlink control signal that is reported from the radio base station 10, the control section 401 commands the transmission signal generation section 402 to generate an uplink data signal.

The mapping section 403 maps the uplink signals generated in the transmission signal generation section 402 to radio resources based on commands from the control section 401, and output the result to the transmitting/receiving section 203. The mapping section 403 can be constituted by a mapper, a mapping circuit or mapping apparatus that can be described based on general understanding of the technical field to which the present invention pertains.

The received signal processing section 404 performs receiving processes (for example, demapping, demodulation, decoding and so on) of received signals that are input from the transmitting/receiving sections 203. Here, the received signals include, for example, downlink signals (downlink control signals, downlink data signals, downlink reference signals and so on) that are transmitted from the radio base station 10. The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present invention.

The received signal processing section 404 outputs the decoded information, acquired through the receiving processes, to the control section 401. The received signal processing section 404 outputs, for example, broadcast information, system information, RRC signaling, DCI and so on, to the control section 401. Also, the received signal processing section 404 outputs the received signals, the signals after the receiving processes and so on, to the measurement section 405.

The measurement section 405 conducts measurements with respect to the received signals. The measurement section 405 can be constituted by a measurer, a measurement circuit or measurement apparatus that can be described based on general understanding of the technical field to which the present invention pertains.

The measurement section 405 may measure, for example, the received power (for example, RSRP), the received signal strength (for example, RSSI), the received quality (for example, RSRQ), the channel state and so on, of the received signal. The measurement results may be output to the control section 401.

### (Hardware Structure)

Note that the block diagrams that have been used to describe the above embodiments show blocks in functional units. These functional blocks (components) may be implemented in arbitrary combinations of hardware and/or software. Also, the means for implementing each functional block is not particularly limited. That is, each functional block may be implemented with 1 piece of physically-integrated apparatus, or may be implemented by connecting 2 physically-separate pieces of apparatus via radio or wire and by using these multiple pieces of apparatus.

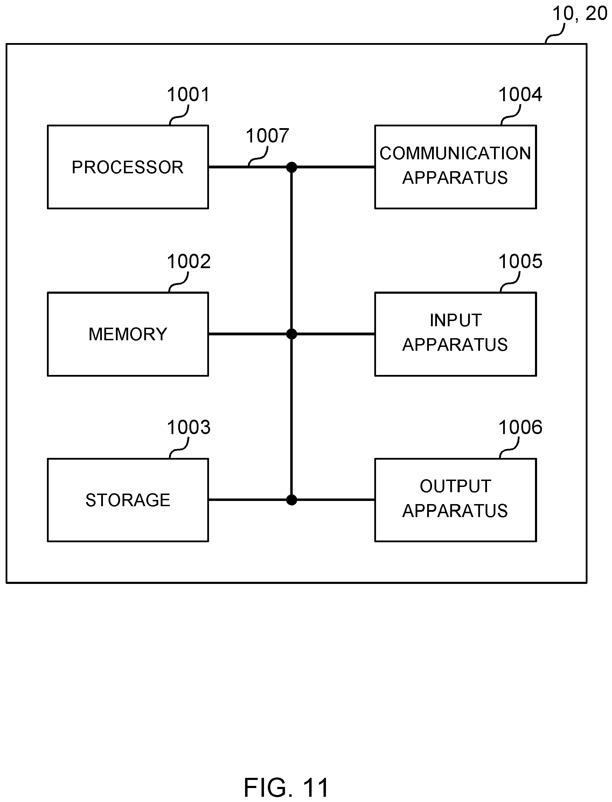

That is, a radio base station, a user terminal and so on according to an embodiment of the present invention may function as a computer that executes the processes of the radio communication method of the present invention. FIG. 11 is a diagram to show an example hardware structure of a radio base station and a user terminal according to one embodiment of the present invention. Physically, the above-described radio base stations 10 and user terminals 20 may be formed as a computer apparatus that includes a processor 1001, a memory 1002, a storage 1003, communication apparatus 1004, input apparatus 1005, output apparatus 1006 and a bus 1007.

Note that, in the following description, the word "apparatus" may be replaced by "circuit," "device," "unit" and so on. Note that the hardware structure of a radio base station 10 and a user terminal 20 may be designed to include one or more of each apparatus shown in the drawings, or may be designed not to include part of the apparatus.

Each function of the radio base station 10 and the user terminal 20 is implemented by reading predetermined software (program) on hardware such as the processor 1001 and the memory 1002, and by controlling the calculations in the processor 1001, the communication in the communication apparatus 1004, and the reading and/or writing of data in the memory 1002 and the storage 1003.

The processor 1001 may control the whole computer by, for example, running an operating system. The processor 1001 may be configured with a central processing unit (CPU), which includes interfaces with peripheral apparatus, control apparatus, computing apparatus, a register and so on. For example, the above-described baseband signal processing section 104 (204), call processing section 105 and so on may be implemented by the processor 1001.

Furthermore, the processor 1001 reads programs (program codes), software modules or data, from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register," a "cache," a "main memory (primary storage apparatus)" and so on. The memory 1002 can store executable programs (program codes), software modules and the like for implementing the radio communication methods according to one embodiment of the present invention.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for allowing inter-computer communication by using wired and/or wireless networks, and may be referred to as, for example, a "network device," a "network controller," a "network card," a "communication module" and so on. For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, etc.). The output apparatus 1006 is an output device for sending output to the outside (for example, a display, a speaker, etc.). Note that the input apparatus 1005 and the output apparatus 1006 may be provided in an integrated structure (for example, a touch panel).

Furthermore, these types of apparatus, including the processor 1001, the memory 1002 and others, are connected by a bus 1007 for communicating information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

Note that the terminology used in this specification and the terminology that is needed to understand this specification may be replaced by other terms that convey the same or similar meanings. For example, "channels" and/or "symbols" may be replaced by "signals (or "signaling")." Also, "signals" may be "messages." Furthermore, a "component carrier (CC)" may be referred to as a "cell," a "frequency carrier," a "carrier frequency" and so on.

Furthermore, a radio frame may be composed of one or more periods (frames) in the time domain. Each of one or more periods (frames) constituting a radio frame may be referred to as a "subframe." Furthermore, a subframe may be composed of one or more slots in the time domain. Furthermore, a slot may be comprised of 1 or multiple symbols (OFDM symbols, SC-FDMA symbols, etc.) in the time domain.

A radio frame, a subframe, a slot and a symbol all represent the time unit in signal communication. A radio frames, a subframe, a slot and a symbol may be each called by other applicable names. For example, one subframe may be referred to as a "transmission time interval (TTI)," or a plurality of consecutive subframes may be referred to as a "TTI," or one slot may be referred to as a "TTI." That is, a subframe and a TTI may be a subframe (1 ms) in existing LTE, may be a shorter period than 1 ms (for example, one to thirteen symbols), or may be a longer period of time than 1 ms.

Here, a TTI refers to the minimum time unit of scheduling in radio communication, for example. For example, in LTE systems, a radio base station schedules the allocation of radio resources (such as the frequency bandwidth and transmission power that can be used by each user terminal) for each user terminal in TTI units. Note that the definition of TTIs is not limited to this. TTIs may be transmission time units for channel-encoded data packets (transport blocks), or may be the unit of processing in scheduling, link adaptation and so on.

A TTI having a time duration of 1 ms may be referred to as a "normal TTI (TTI in LTE Rel. 8 to 12)," a "long TTI," a "normal subframe," a "long subframe," and so on. A TTI that is shorter than a normal TTI may be referred to as a "shortened TTI," a "short TTI," a "shortened subframe," a "short subframe," or the like.

A resource block (RB) is the unit of resource allocation in the time domain and the frequency domain, and may include one or a plurality of consecutive subcarriers in the frequency domain. Also, an RB may include one or more symbols in the time domain, and may be one slot, one subframe or one TTI in length. One TTI and one subframe each may be composed of one or more resource blocks. Note that an RB may be referred to as a "physical resource block (PRB: Physical RB)," a "PRB pair," an "RB pair," or the like.

Furthermore, a resource block may be comprised of one or more resource elements (REs). For example, one RE may be a radio resource field of one subcarrier and one symbol.

Note that the above-described structures of radio frames, subframes, slots, symbols and so on are merely examples. For example, configurations such as the number of subframes included in a radio frame, the number of slots included in a subframe, the number of symbols and RBs included in a slot, the number of subcarriers included in an RB, the number of symbols in a TTI, the symbol duration and the cyclic prefix (CP) duration can be variously changed.

Also, the information and parameters described in this specification may be represented in absolute values or in relative values with respect to predetermined values, or may be represented in other information formats. For example, radio resources may be specified by predetermined indices.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation and microwaves), these wired technologies and/or wireless technologies are also included in the definition of communication media.

As used herein, the terms "system" and "network" are used interchangeably.

A base station can accommodate one or more (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs: Remote Radio Heads)). The term "cell" or "sector" refers to part or all of the coverage area of a base station and/or a base station subsystem that provides communication services within this coverage.

As used herein, the terms "base station (BS)," "radio base station," "eNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

As used herein, the terms "mobile station (MS)" "user terminal," "user equipment (UE)" and "terminal" may be used interchangeably. A base station may be referred to as a "fixed station," "NodeB," "eNodeB (eNB)," "access point," "transmission point," "receiving point," "femto cell," "small cell" and so on.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client" or some other suitable terms.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (D2D: Device-to-Device). In this case, user terminals 20 may have the functions of the radio base stations 10 described above. In addition, wording such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

The examples/embodiments illustrated in this specification may be used individually or in combinations, which may be switched depending on the mode of implementation. Also, predetermined information (for example, reporting of information to the effect that "X holds") does not necessarily have to be reported explicitly, and can be reported in an implicit manner (by, for example, not reporting this piece of information).

Reporting of information is by no means limited to the examples/embodiments described in this specification, and other methods may be used as well. For example, reporting of information may be implemented by using physical layer signaling (for example, DCI (Downlink Control Information) and UCI (Uplink Control Information)), higher layer signaling (for example, RRC (Radio Resource Control) signaling, broadcast information (the MIB (Master Information Blocks) and SIBs (System Information Blocks) and so on) and MAC (Medium Access Control) signaling, other signals or combinations of these.

Also, RRC signaling may be referred to as "RRC messages," and can be, for example, an RRC connection setup message, RRC connection reconfiguration message, and so on. Also, MAC signaling may be reported using, for example, MAC control elements (MAC CEs (Control Elements)).

The aspects/embodiments illustrated in this specification may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New RAT (Radio Access Technology), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods, and/or next-generation systems that are enhanced based on these.

The order of processes, sequences, flowcharts and so on that have been used to describe the aspects/embodiments herein may be re-ordered as long as inconsistencies do not arise. For example, although various methods have been illustrated in this specification with various components of steps in exemplary orders, the specific orders that are illustrated herein are by no means limiting.

Now, although the present invention has been described in detail above, it should be obvious to a person skilled in the art that the present invention is by no means limited to the embodiments described herein. For example, the above-described embodiments may be used individually or in combinations. The present invention can be implemented with various corrections and in various modifications, without departing from the spirit and scope of the present invention defined by the recitations of claims. Consequently, the description herein is provided only for the purpose of explaining examples, and should by no means be construed to limit the present invention in any way.

The disclosure of Japanese Patent Application No. 2016-063793, filed on March 28, 2016, including the specification, drawings and abstract, is incorporated herein by reference in its entirety.

## Claims

1. A user terminal comprising:
a receiving section that receives a synchronization signal and a broadcast signal; and
a control section that specifies a frequency hopping pattern that is applied to the broadcast signal based on the synchronization signal.

2. The user terminal according to claim 1, wherein the control section specifies the frequency hopping pattern based on information that is reported explicitly in the synchronization signal.

3. The user terminal according to claim 1, wherein the control section specifies the frequency hopping pattern based on at least one of a transmission pattern of the synchronization signal and a sequence of the synchronization signal.

4. The user terminal according to claim 1, wherein the control section specifies whether or not to applyfrequency hopping to the broadcast signal based on the synchronization signal.

5. The user terminal according to claim 1, wherein the control section acquires information related to at least one of a frequency resource, a time resource, a modulation and coding scheme and a transport block size of the broadcast signal based on the synchronization signal.

6. The user terminal according to claim 1, further comprising a transmission section that transmits terminal capability information related to a bandwidth where the user terminal is capable of transmission and/or reception,
wherein, when information about a plurality of bandwidths is transmitted as the terminal capability information, the control section exerts control so that reception of the broadcast signal is attempted assuming that the broadcast signal is transmitted in at least one of the plurality of bandwidths.

7. A radio base station comprising:
a transmission section that transmits a synchronization signal and a broadcast signal; and
a control section that controls the synchronization signal to be generated in association with a frequency hopping pattern that is applied to the broadcast signal.

8. A radio communication method comprising:
receiving a synchronization signal and a broadcast signal; and
specifying a frequency hopping pattern that is applied to the broadcast signal based on the synchronization signal.
